# EUROPÄISCHE PATENTANMELDUNG

(11) **EP 1 750 110 A2**
(43) Veröffentlichungstag der Anmeldung: **07.02.2007**
(21) Anmeldenummer: 06115273.2
(22) Anmeldetag: 12.06.2006
(51) Int. Cl.: G01L 13/02, G01L 9/06

(54) **Differenzdrucksensor mit Drift- und Hysteresereduktion und entsprechendes Messverfahren**

(30) Priorität: 04.08.2005 DE 102005036735
(71) Anmelder: ROBERT BOSCH GMBH, 70442 Stuttgart (DE)
(72) Erfinder: Muchow, Joerg, 72764, Reutlingen (DE); Junger, Andreas, 72770, Reutlingen (DE); Ullrich, Guenther-Nino-Carlo, 72766, Reutlingen (IT); Gampp, Ronald, 72764, Reutlingen (DE); Lepidis, Polichronis, 72770, Reutlingen (DE)

(57) **Zusammenfassung**

Die vorliegende Erfmdung schafft eine Messvorrichtung (100) zur Bestimmung eines Differenzdrucks mit einer ersten Druckerfassungseinrichtung (101) zur Erfassung eines ersten Drucks (102), mindestens einer zweiten Druckerfassungseinrichtung (201) zur Erfassung mindestens eines zweiten Drucks (202) wobei die erste und zweite Druckerfassungseinrichtung (101; 201) ein entsprechendes Diffenrenzdrucksignal angeben.. Die ersten und zweiten Druckerfassungseinrichtungen (101, 201) sind auf einem gemeinsamen Substrat (302) separat voneinander angeordnet und zueinander derart positioniert, dass thermomechanische Spannungen in dem Substrat als erste und zweite Drucksignale (103, 203) erfasst werden, die sich in dem Differenzdrucksignal (301) gegenseitig kompensieren.

## Beschreibung

Die vorliegende Erfindung betrifft allgemein Drucksensoren, und betrifft insbesondere Drucksensoren, welche zur Erfassung von Druckdifferenzen ausgelegt sind, und ein entsprechendes Messverfahren.

Spezifisch betrifft die vorliegende Erfmdung eine Messvorrichtung zur Bestimmung eines Differenzdrucks, bei der eine erste Druckerfassungseinrichtung zur Erfassung eines ersten Drucks und zur Ausgabe eines ersten Drucksignals und mindestens eine zweite Druckerfassungseinrichtung zur Erfassung mindestens eines zweiten Drucks und zur Ausgabe mindestens eines zweiten Drucksignals vorgesehen sind, wobei die erste und zweite Druckerfassungseinrichtung zur Ausgabe mindestens eines Differenzdrucksignals in Abhängigkeit einer Druckdifferenz zwischen dem ersten Druck und dem mindestens einen zweiten Druck gestaltet sind.

### STAND DER TECHNIK

Ein herkömmlicher Differenzdrucksensor ist aus der DE-US 39 28 542 bekannt. Hierbei wird eine Messmembran an ihrer Ober- und Unterseite jeweils von einem Druck p1 bzw. p2 beaufschlagt. Die Membran ist an ihrer Ober- oder Unterseite mit Sensorelementen versehen mit, beispielsweise miteinander verschalteten, piezoresistiven Widerständen, deren Widerstand sich aufgrund der Membrandehnung ändert. Eine derartige Membrandehnung und damit eine Änderung des Schaltungswiderstands ist ein Maß für die zu messende Druckdifferenz, d.h. die Differenz zwischen den beiden Drücken p1 und p2. In der US-PS 48 95 026 ist ein Differenzdrucksensor beschrieben, der insbesondere bei niedrigen Druckdifferenzen einsetzbar ist. Der Drucksensor weist zwei Messmembranen auf, wobei jeweils die Oberseite der einen Messmembran und die Unterseite der anderen Messmembran mit den Drucken p1 bzw. p2 beaufschlagt werden.

Ein weiterer Drucksensor ist in der DE 37 03 685 beschrieben. Bei diesem Drucksensor ist zwischen dem Medium und der diesem zugewandten Seite der Messmembran eine widerstandsfähige Trennmembran angeordnet, wobei der Zwischenraum mit einem inkompressiblen Medium gefüllt ist. Dadurch ist es möglich, auch aggressive und/oder korrosive Medien hinsichtlich ihres Drucks zu vermessen.

Ein Nachteil üblicher Differenzdrucksensoren besteht darin, dass diese sehr aufwendig aufgebaut sind und aufgrund von Änderungen der Trennmembranen und des Zwischenmittels oft keine ausreichenden Genauigkeiten erreichen.

Zur Lösung dieses Problems ist in dem Stand der Technik vorgeschlagen worden, einen Differenzdrucksensor mit hoher Genauigkeit und geringen Kosten auszulegen, wie er in der DE 42 27 893 A1 beschrieben ist. Dieser Differenzdrucksensor weist eine erste Halbleitermembran, auf deren Oberseite mindestens ein Sensorelement ausgebildet ist, und dessen Unterseite von einem der den Differenzdruck bildenden Drücke beaufschlagt wird, und eine zweite Membran mit mindestens einem Sensorelement auf ihrer Oberseite auf, die durch den zweiten, den Differenzdruck bildenden Druck auf ihrer Unterseite beaufschlagt wird. Die beiden Sensorelemente sind zur Differenzbildung verschaltet.

Ein wesentlicher Nachteil des in der Druckschrift DE 42 27 893 A1 beschriebenen Differenzdrucksensor besteht darin, dass aufgrund der getrennten Auslegung der Messmembranen Temperatureinflüsse die Genauigkeit der Druckmessung herabsetzen. Durch die großen Abmessungen des Differenzdrucksensors, welche durch das Doppelmembrankonzept bedingt sind, wirken auf den gesamten Chip des Differenzdrucksensors hohe Kräfte durch eine Verklebung, mit der der Differenzdrucksensor auf einem Substrat fixiert ist. Hierbei wird eine höhere mechanische Spannung induziert, als dies bei kleineren Chips der Fall ist. Ferner weisen die die Klebeverbindung bildenden Kleber ein viskoelastisches Materialverhalten auf. Dies führt dazu, dass der Kleber kriecht, was zu Drift- und Hysterese-Effekten im Ausgangssignal führt.

### VORTEILE DER ERFINDUNG

Die der in Anspruch 1 bzw. 6 definierte Erfindung zugrundeliegende Idee besteht daher darin, unerwünschte Einflüsse auf die Druckmessung, die montagebedingt und daher unvermeidbar sind, zu minimieren. Zu diesem Zweck werden erste und zweite Druckerfassungseinrichtungen bereitgestellt, die derartig zueinander positioniert sind, dass mechanische Spannungen in dem Substrat als erste und zweite Drucksignale erfasst werden, die sich jedoch durch Differenzbildung in dem Differenzdrucksignal vollständig kompensieren. Hierbei geben die erste und zweite Druckerfassungseinrichtung erste und zweite Drucksignale und ein in Abhängigkeit von den ersten und zweiten Drucksignalen ermitteltes Differenzdrucksignal aus.

Vorzugsweise sind die ersten und zweiten Druckerfassungseinrichtungen jeweils mit vier Sensorelementen ausgestattet, die beispielsweise als piezoresistive Widerstände ausgelegt sind. Eine durch eine Druckänderung hervorgerufene Dehnung einer Messmembran führt damit jeweils zu Widerstandsänderungen der Sensorelemente. Die Sensorelemente sind vorzugsweise in einer Brückenschaltung verschaltet, derart, dass eine Brückendiagonalspannung als ein Drucksignal ein Maß für den gemessenen Druck darstellt. In zweckmäßiger Weise sind die ersten bis vierten Sensorelemente der ersten Druckerfassungseinrichtung gegenüber den ersten bis vierten Sensorelementen der zweiten Druckerfassungseinrichtung um 180° verdreht auf dem Substrat angeordnet.

Die ersten und zweiten Druckerfassungseinrichtungen weisen jeweils erste und zweite Membranen auf, auf welchen jeweils die ersten und vierten Sensorelemente aufgebracht sind, wobei die Membranen vorzugsweise als Halbleitermembranen ausgelegt sind.

### ZEICHNUNGEN

Ausführungsbeispiele der Erfindung sind in den Zeichnungen dargestellt und in der nachfolgenden Beschreibung näher erläutert.

In den Zeichnungen zeigen:
- Fig. 1(a): eine Halbleitermembran mit darauf aufgebrachten Sensorelementen und entsprechenden Verbindungsanschlüssen;
- Fig. 1(b): eine zu Fig. 1(a) korrespondierende Druckmesseinrichtung, die zur Bestimmung eines Differenzdrucksignals verschaltbar ist;
- Fig. 2: ein Blockdiagramm der elektronischen Schaltungsanordnung mit zwei Druckerfassungseinrichtungen und einer Auswerteeinrichtung; und
- Fig. 3: zwei auf einem gemeinsamen Substrat angeordnete Druckerfassungseinrichtungen zur Bestimmung einer Druckdifferenz gemäß einem bevorzugten Ausführungsbeispiel der vorliegenden Erfindung.

In den Figuren bezeichnen gleiche Bezugszeichen gleich oder funktionsgleiche Komponenten oder Schritte.

### BESCHREIBUNG DER AUSFÜHRUNGSBEISPIELE

Nachstehend wird die Erfindung an Hand eines bevorzugten Ausführungsbeispiels erläutert. Ein Anwendungsbeispiel für Differenzdrucksensoren stellen Dieselpartikelfilter dar, bei welchen durch einen derartigen Differenzdrucksensor der Zustand des Filters überwacht wird. Bisher wird ein Sensor verwendet, bei dem die Differenz zweier Drücke bestimmt wird, indem ein Druck auf die Vorderseite des Sensors geleitet wird, und der andere Druck die Rückseite des Sensors beaufschlagt. Zur Vermeidung einer Chipkorrosion bei der Vorderseitenbeaufschlagung ist der erfmdungsgemäße Drucksensor mit zwei Druckerfassungseinrichtungen ausgestattet.

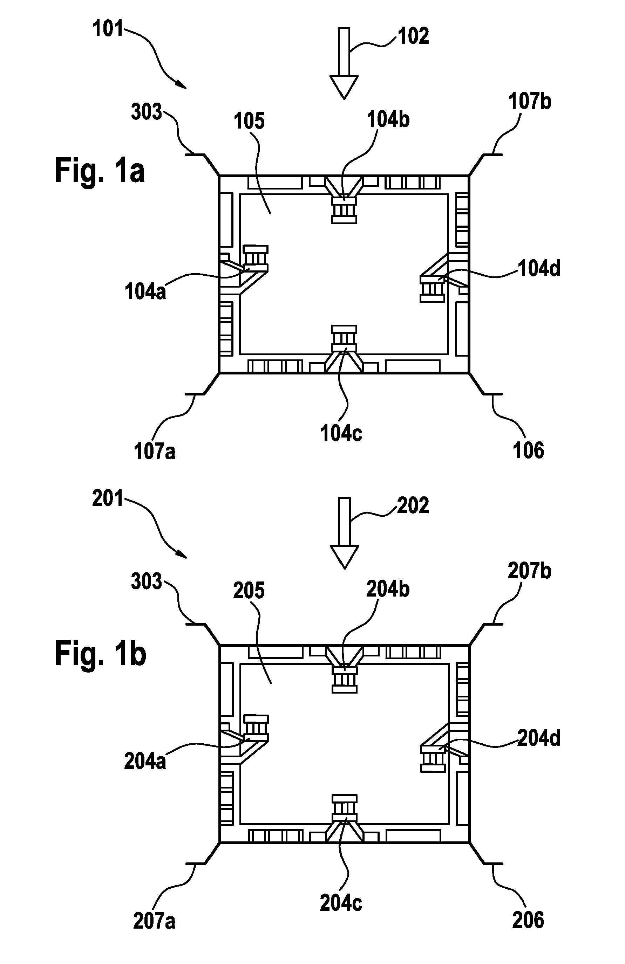

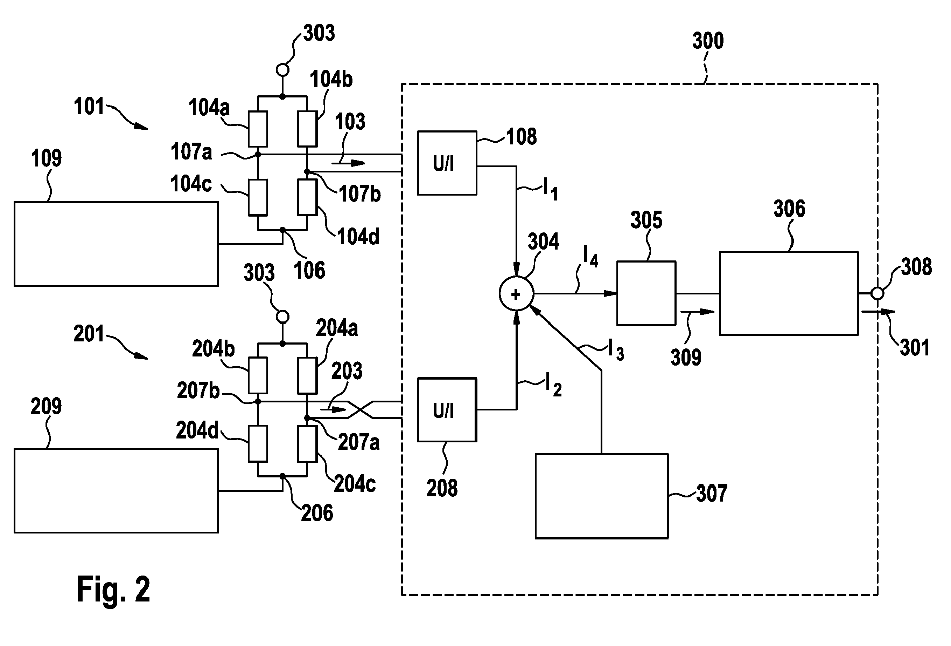

Gemäß dem bevorzugten Ausführungsbeispiel dient hierbei eine erste Druckerfassungseinrichtung 101 zur Erfassung eines ersten Drucks 102, wie in Fig. 1(a) gezeigt. Hierbei besteht die aus einem Substrat (hier nicht gezeigt) angeordnete Druckerfassungseinrichtung 101 im Wesentlichen aus einer ersten Membran 105, welche vier Sensorelemente 104a, 104b, 104c und 104d darauf angeordnet aufweist. Die Sensorelemente sind vorzugsweise als piezoresistive Widerstände ausgelegt, wobei die Sensorelemente in zweckmäßiger Weise in einer Brückenschaltung, wie beispielsweise einer Wheatstone-Brücke verschaltet sind. Eine Verschaltung der ersten bis vierten Sensorelemente für die erste bzw. zweite Druckerfassungseinrichtung ist untenstehend unter Bezugnahme auf Fig. 2 beschrieben. An dieser Stelle sei nur erwähnt, dass ein Bezugszeichen 303 einen Versorgungsspannungsanschluss bezeichnet, an welchen ein Versorgungsspannungspotential angelegt wird. Der Anschluss 106 bezeichnet ein erstes Brückenfußpunktpotential der ersten Druckerfassungseinrichtung. Eine Brückendiagonalspannung wird zwischen den ersten und zweiten Brückendiagonalspannungsausgängen 107a, 107b abgegriffen und zur Auswertung einer Auswerteeinrichtung 300 (untenstehend unter Bezugnahme auf Fig. 2 beschrieben) zugeführt.

Hierbei ist das erste Sensorelement 104a (piezoresistiver Widerstand) zwischen dem Versorgungsspannungspotential 303 und dem Brückendiagonalspannungsausgang 107a angeschlossen, das zweite Sensorelement 104b ist zwischen dem Versorgungsspannungspotential 303 und dem Brückendiagonalspannungsausgang 107b angeschlossen, das dritte Sensorelement 104c ist zwischen dem Brückendiagonalspannungsausgang 107a und dem ersten Brückfußpunktpotential 106 angeschlossen und das vierte Sensorelement 104d ist zwischen dem Brückendiagonalspannungsausgang 107b und dem ersten Brückenfußpunktpotential 106 angeschlossen. Wird die erste Membran 105 der ersten Druckerfassungseinrichtung 101 nun mit einem ersten Druck 102 beaufschlagt, so ergibt sich ein erstes Drucksignal 103 (Fig. 2) dadurch, dass die in der Brückenschaltung verschalteten ersten bis vierten Sensorelemente 104a-104d unterschiedliche Widerstandsänderungen erfahren, die beispielsweise eine Verstimmung der Messbrücke bewirken, derart, dass eine Brückendiagonalspannung zwischen den Brückendiagonalspannungsausgängen 107a, 107b abgreifbar ist.

Fig. 1(b) zeigt eine zu der ersten Druckerfassungseinrichtung 101 korrespondierende zweite Druckerfassungseinrichtung 201 zur Erfassung eines zweiten Drucks 202. Die Erzeugung eines zweiten Drucksignals 203 (Fig. 2) erfolgt analog zu der Erzeugung des ersten, unter Bezugnahme auf Fig. 1(a) beschriebenen Drucksignals 103. In dem bevorzugten Ausführungsbeispiel der vorliegenden Erfindung sind die ersten und zweiten Druckerfassungseinrichtungen 101 bzw. 201 identisch. Somit weist die zweite Druckerfassungseinrichtung 201 ebenfalls vier Sensorelemente 204a, 204b, 204c und 204d auf, die wie in der unter Bezugnahme auf Fig. 1(a) beschriebenen ersten Druckerfassungseinrichtung 101 zwischen dem Versorgungsspannungspotential 303 und einem zweiten Fußpunktpotential 206 verschaltet sind.

Die zweite Brückendiagonalspannung wird somit zwischen den zweiten Brückendiagonalspannungsausgängen 207a bzw. 207b abgegriffen und zur Bestimmung des zweiten Drucks 202 herangezogen. Die zweite, an den zweiten Brückendiagonalspannungsausgängen 207a, 207b abgegriffene Brückendiagonalspannung dient als das zweite Drucksignal 203 (Fig. 2), welches wie untenstehend beschrieben weiter ausgewertet wird. Es sei darauf hingewiesen, dass zur Bestimmung eines Differenzdrucks die ersten und zweiten Druckerfassungseinrichtungen 101, 201 mit einem ersten bzw. zweiten Druck 102 bzw. 202 gleichzeitig beaufschlagt werden müssen. Daher sind die ersten und zweiten Druckerfassungseinrichtungen 101, 201 üblicherweise auf einem gemeinsamen Chip bzw. auf einem gemeinsamen Substrat 302 angeordnet (in den Fig. 1(a) und 1(b) nicht gezeigt).

Im Folgenden wird zunächst und unter Bezugnahme nunmehr auf Fig. 2 die elektronische Schaltungsanordnung zur Auswertung der ersten und zweiten Drucksignale 103, 203 und zur Bereitstellung eines Differenzdrucksignals 301 in Abhängigkeit von einem erfassten ersten Druck 102 und einem erfassten zweiten Druck 202 erläutert werden.

Wie in Fig. 2 gezeigt, sind die Sensorelemente 104a-104d der ersten Druckerfassungseinrichtung 101 und die Sensorelemente 204a-204d der zweiten Druckerfassungseinrichtung 201 jeweils in einer Brückenschaltung angeordnet, welche mit dem Versorgungsspannungspotential 303 versorgt wird. An den ersten bzw. zweiten Brückenfußpunktpotentialen 106 bzw. 206 sind jeweilige erste bzw. zweite Parametereinstelleinrichtungen 109 bzw. 209 angeschlossen, mit welchen Parameter der jeweiligen Brückenschaltungen variiert werden können.

Derartige Parameter umfassen beispielsweise die Brückenempfindlichkeit und/oder einen Temperaturkoeffizienten der Empfindlichkeits-Wert. Die erste Druckerfassungseinrichtung 101 bzw. die Verschaltung der ersten Sensorelemente 104a-104d liefert zwischen den ersten Brückendiagonalspannungsausgängen 107a, 107b das erste Drucksignal 103, das einem ersten Spannungs-Stromwandler (U/I) 108 zugeführt wird. Der erste Spannungs-Stromwandler 108 gibt ein der ersten Brückdiagonalspannung proportionale Stromsignal I₁ aus, welches einer Summationseinheit 304 zugeführt wird.

In ähnlicher Weise wie die erste Druckerfassungseinrichtung 101 ist die zweite Druckerfassungseinrichtung 201 ausgelegt. Die zweite Druckerfassungseinrichtung 201 erfasst einen zweiten Druck 202, wobei das zweite Drucksignal 203 als die Brückendiagonalspannung zwischen den zweiten Brückendiagonalspannungsausgängen 207a, 207b ausgegeben wird. Wie bei der ersten Druckerfassungseinrichtung 101 wird das zweite Brückenfußpunktpotential 206 durch eine zweite Parametereinstelleinrichtung 209 beaufschlagt, mit welcher beispielsweise ein Temperaturkoeffizient der Empfindlichkeit-Parameter einstellbar ist.

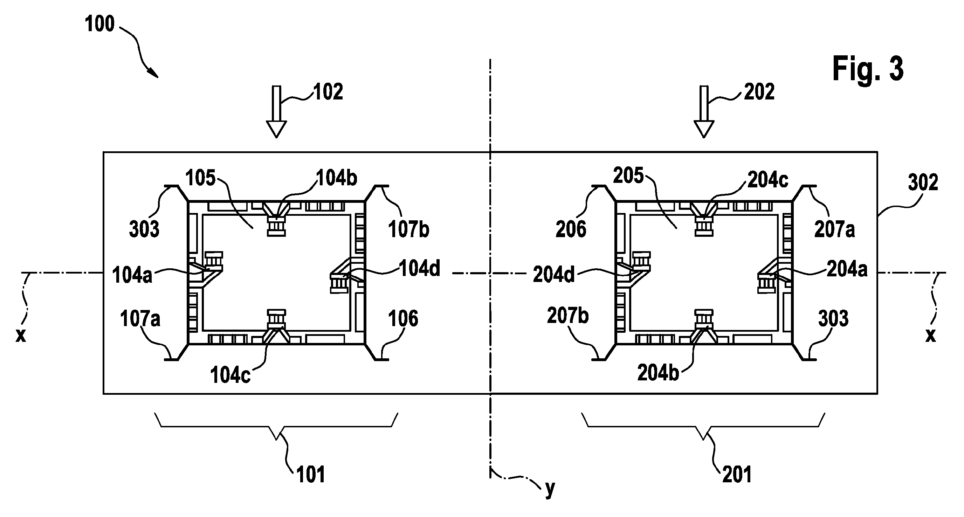

Unter Bezugnahme auf die in Fig. 3 veranschaulichte Anordnung wird das zweite Drucksignal 203 invertiert, um die der Erfindung zugrunde liegende Problematik abzumildern, d.h. um den Einfluss von Temperaturschwankungen auf dem Substrat 302 (Fig. 3) auf das Messergebnis zu minimieren.

Zunächst wird das Zustandekommen des Differenzdrucksignals 301 erläutert. Das zweite Drucksignal 203 wird (invertiert) einem zweiten Spannungs-Stromwandler 208 zugeführt, welcher das zweite Drucksignal 203 in ein entsprechendes Stromsignal I₂ wandelt. Ebenso wie das Stromsignal I₁ der ersten Druckerfassungseinrichtung 101 wird das zweite Stromsignal I₂ der zweiten Druckerfassungseinrichtung 201 der Summationseinheit 304 zugeführt. Ferner wird die Summationseinheit 304 durch einen von einer Parametereinstelleinheit 307 bereitgestellten Offsetstrom I₃ beaufschlagt. Durch die Parametereinstelleinheit 307 ist es möglich, sowohl einen Offsetstrom I₃ als auch einen Temperaturkoeffizient des Offsets-Parameter einzustellen.

Die Stromsignale I₁, I₂ und I₃ werden in der Summationseinheit 304 aufsummiert und resultieren in einem Summations-Stromsignal I₄, welches einem Strom-Spannungswandler 305 zugeführt wird. Der Strom-Spannungswandler 305 gibt ein Spannungssignal 309 aus, welches einer Verstärkereinheit 306 zugeführt wird. Dieses Spannungssignal 309 entspricht durch die in der Summationseinheit 304 durchgeführte Summation einem Differenzdruck zwischen dem ersten Druck 102, der durch die erste Druckerfassungseinrichtung 101 erfasst wird, und dem zweiten Druck 202, der durch die zweite Druckerfassungseinrichtung 201 erfasst wird. Die Verstärkereinheit 306 kann als einen weiteren Parameter eine Empfindlichkeit der Messanordnung varüeren, derart, dass ein Differenzdrucksignal 301 an eine Weiterverarbeitung in externen Schaltungseinheiten (nicht gezeigt) anpassbar ist. Über eine Ausgabeeinheit 308 wird das Differenzdrucksignal 301 an externe Schaltungseinheiten ausgegeben.

Die unter Bezugnahme auf Fig. 2 beschriebene elektronische Schaltungsanordnung zur Auswertung zweier Drucksignale 103 bzw. 203 und zur Bestimmung eines Differenzdrucksignals 301 in Abhängigkeit von einer Druckdifferenz zwischen einem ersten Druck 102 und einem zweiten Druck 202 arbeitet so lange einwandfrei, so lange eine Dehnung (mechanische Spannung) der Sensorelemente 104a-104d der ersten Druckerfassungseinrichtung bzw. der Sensorelemente 204a-204d der zweiten Druckerfassungseinrichtung 201 ausschließlich durch Druckbeaufschlagung (102 bzw. 202) hervorgerufen wird.

Durch die Auslegung der Messvorrichtung 100 zur Bestimmung des Differenzdrucks in zwei unterschiedlichen Druckerfassungseinrichtungen 101 bzw. 201 (Fig. 1) besteht jedoch in nachteiliger Weise die Möglichkeit, dass auch Spannungen (mechanische Belastungen durch Klebeverbindungen) in dem Substrat 302 zu entsprechenden Drucksignalen führen können. Eine derartige Spannungsverteilung lässt sich beispielsweise durch eine FEM-Simulation (Finite-Elemente-Methode, FEM) bestimmen (hier nicht gezeigt). Derartige mechanische Spannungen entstehen insbesondere durch eine Temperaturlast, da Ausdehnungskoeffizienten von Substrat (beispielsweise Silizium), Klebeverbindung, eingesetztem Glas und/oder Keramik äußerst unterschiedlich sind. In einer ersten Näherung ist eine durch eine Temperaturlast hervorgerufene mechanische Spannung unabhängig von dem zu messenden Druck bzw. Differenzdruck.

FEM-Untersuchungen haben gezeigt, dass derartige mechanische Spannungen (bzw. Stress) axial symmetrisch auftreten, d.h. symmetrisch zu den in Fig. 3 gezeigten Achsen x und y. Die entsprechenden Symmetrieachsen sind in der Fig. 3 jeweils durch strich-punktierte Linien angezeigt. Somit wurde in FEM-Simulationen (Finite-Elemente-Methode, FEM) eine Simulation lediglich für ein Viertel der in Fig. 3 gezeigten Struktur, d.h. in dem in Fig. 3 gezeigten, rechts oben gelegenen Flächenabschnitt des Substrats 302, der durch die Symmetrieachsen x, y herausgeschnitten wird, durchgeführt.

Fig. 3 zeigt einen Differenzdrucksensor gemäß dem bevorzugten Ausführungsbeispiel der vorliegenden ErFindung. Das Substrat 302 ist in zwei Bereiche aufgeteilt, d.h. einen ersten Bereich, auf welchem die erste Druckerfassungseinrichtung 101 angeordnet ist (links) und einen zweiten Bereich, auf dem die zweite Druckerfassungseinrichtung 201 angeordnet ist (rechts). Erfindungsgemäß ist die zweite Druckerfassungseinrichtung 201 nunmehr um 180° verdreht zu der ersten Druckerfassungseinrichtung 101 angeordnet (vergl. mit Fig. 1). Auf diese Weise werden Drucksignale, die durch thermomechanische Spannungen hervorgerufen werden, die lediglich durch eine Temperaturlast auf dem Substrat 302 bedingt sind, durch die Differenzbildung, die letztlich in der Summationseinheit 304 (Fig. 2) bereitgestellt wird, gegeneinander kompensiert.

Wie in Fig. 3 gezeigt, sind die Sensorelemente 204b, 204c im Vergleich zu den Sensorelementen 104b, 104c vertauscht angeordnet, während die Sensorelemente 204a, 204d gegenüber den Sensorelementen 104a, 104d vertauscht angeordnet sind. Somit kompensieren sich, unter Bezugnahme auf die in Fig. 2 dargestellte Auswerteschaltung, auftretende Messsignale, die lediglich durch thermomechanische Spannungen hervorgerufen werden. Dadurch, dass die erste und die zweite Druckerfassungseinrichtung 101, 201 auf dem gemeinsamen Substrat 302 getrennt voneinander und derart positioniert sind, dass mechanische Spannungen in dem Substrat als erste und zweite Drucksignale 103, 203 erfasst werden, können sich die Drucksignale in dem Differenzdrucksignal 301 gegenseitig kompensieren.

Mit anderen Worten sind die Membranen 105, 205 relativ zueinander derart angeordnet, dass sich die Wirkung des durch Temperatur hervorgerufenen Stresses bei der Subtraktion der Signale herauskürzt. Ebenfalls spielen plastische Verformungen, die eine Hysterese aufweisen, keine negative Rolle und beeinflussen das Differenzdrucksignal 301 nicht.

### BEZUGSZEICHENLISTE

In den Figuren bezeichnen gleiche Bezugszeichen gleiche oder funktionsgleiche Komponenten oder Schritte.
- 100: Messvorrichtung
- 101: erste Druckerfassungseinrichtung
- 102: erster Druck
- 103: erstes Drucksignal
- 104a,: Sensorelemente
- 104b,:
- 104c, 104d:
- 105: Erste Membran
- 106: Erstes Brückenfußpunktpotential
- 107a, 107b: Erster Brückendiagonalspannungsausgang
- 108: Erster Spannungs-Stromwandler
- 109: Erste Parametereinstelleinrichtung
- 201: zweite Druckerfassungseinrichtung
- 202: zweiter Druck
- 203: zweites Drucksignal
- 204a,: Sensorelemente
- 204b,:
- 204c,204d:
- 205: zweite Membran
- 206: Zweites Brückenfußpunktpotential
- 207a, 207b: Zweiter Brückendiagonalspannungsausgang
- 208: Zweiter Spannungs-Stromwandler
- 209: Zweite Parametereinstelleinrichtung
- 300: Auswerteeinrichtung
- 301: Differenzdrucksignal
- 302: Substrat
- 303: Versorgungsspannungspotential
- 304: Summationseinheit
- 305: Strom-Spannungswandler
- 306: Verstärkereinheit
- 307: Parametereinstelleinheit
- 308: Ausgabeeinheit
- 309: Spannungssignal

## Patentansprüche

1. Messvorrichtung (100) zur Bestimmung eines Differenzdrucks, mit:
a) einer ersten Druckerfassungseinrichtung (101) zur Erfassung eines ersten Drucks (102) und zur Ausgabe eines ersten Drucksignals (103);
b) mindestens einer zweiten Druckerfassungseinrichtung (201) zur Erfassung mindestens eines zweiten Drucks (202) und zur Ausgabe mindestens eines zweiten Drucksignals (203); und
c) wobei die erste und zweite Druckerfassungseinrichtung (101; 201) zur Ausgabe mindestens eines Differenzdrucksignals (301) in Abhängigkeit einer Druckdifferenz zwischen dem ersten Druck (102) und dem mindestens einen zweiten Druck (202) gestaltet sind,
**dadurch gekennzeichnet, dass**
d) die erste (101) und die mindestens eine zweite Druckerfassungseinrichtung (201) auf einem gemeinsamen Substrat (302) separat voneinander angeordnet sind; und
e) zueinander derart positioniert sind, dass thermomechanische Spannungen in dem Substrat (302) als erste und zweite Drucksignale (103, 203) erfasst werden, die sich in dem Differenzdrucksignal (301) gegenseitig kompensieren.

2. Vorrichtung nach Anspruch 1,
**dadurch gekennzeichnet,**
**dass** erste (101) und die mindestens eine zweite Druckerfassungseinrichtung (201) jeweils erste und zweite Membranen (105, 205) aufweisen, auf welchen jeweils erste bis vierte Sensorelemente (104a, 104b, 104c, 104d; 204a, 204b, 204c, 204d) angeordnet sind.

3. Vorrichtung nach mindestens einem der voranstehenden Ansprüche,
**dadurch gekennzeichnet,**
**dass** die ersten bis vierten Sensorelemente (104a, 104b, 104c, 104d; 204a, 204b, 204c, 204d) der ersten und zweiten Druckerfassungseinrichtungen (101, 201) in einer Brückenschaltung verschaltet sind.

4. Vorrichtung nach mindestens einem der voranstehenden Ansprüche,
**dadurch gekennzeichnet,**
**dass** die ersten bis vierten Sensorelemente (104a, 104b, 104c, 104d) der ersten Druckerfassungseinrichtung (101) gegenüber den ersten bis vierten Sensorelementen (204a, 204b, 204c, 204d) der zweiten Druckerfassungseinrichtung (201) um 180 Grad verdreht auf dem Substrat (302) angeordnet sind.

5. Vorrichtung nach mindestens einem der voranstehenden Ansprüche,
**dadurch gekennzeichnet,**
**dass** die erste und/oder die zweite Membran (105, 205) als eine Halbleitermembran ausgebildet ist.

6. Verfahren zum Bestimmen eines Differenzdrucks, mit den folgenden Schritten:
a) Erfassen eines ersten Drucks (102) und Ausgeben eines ersten Drucksignals (103) mittels einer ersten Druckerfassungseinrichtung (101);
b) Erfassen mindestens eines zweiten Drucks (202) und Ausgeben mindestens eines zweiten Drucksignals (203) mittels mindestens einer zweiten Druckerfassungseinrichtung (201); und
c) Ausgeben mindestens eines Differenzdrucksignals (301) in Abhängigkeit einer Druckdifferenz zwischen dem ersten Druck (102) und dem mindestens einen zweiten Druck (202),
**dadurch gekennzeichnet,**
**dass** die erste (101) und die mindestens eine zweite Druckerfassungseinrichtung (201) auf einem gemeinsamen Substrat (302) separat voneinander derart angeordnet und positioniert sind, dass mechanische Spannungen in dem Substrat (302) als erste und zweite Drucksignale (103, 203) erfasst werden, die sich in dem Differenzdrucksignal (301) gegenseitig kompensieren.
